# EUROPEAN PATENT SPECIFICATION

(11) **EP 3 951 280 B1**
(45) Date of publication and mention of the grant of the patent: **29.03.2023**
(21) Application number: 20803033.8
(22) Date of filing: 08.05.2020
(51) Int. Cl.: F24F 11/61, F24F 11/64, F24F 11/52, F24F 11/65, F24F 11/30, F24F 11/49, F24F 110/50, F24F 8/00

(54) **METHOD FOR CONTROLLING START OF PURIFICATION FUNCTION OF AIR CONDITIONER**
VERFAHREN ZUR STEUERUNG DES BEGINNS DER REINIGUNGSFUNKTION EINER KLIMAANLAGE
PROCÉDÉ DE COMMANDE DE DÉMARRAGE DE FONCTION DE PURIFICATION DE CLIMATISEUR

(30) Priority: 09.05.2019 CN 201910386229
(43) Date of publication of application: 09.02.2022
(73) Proprietor: Qingdao Haier Air Conditioner General Corp., Ltd., Qingdao, Shandong 266101 (CN); Haier Smart Home Co., Ltd., Qingdao, Shandong 266101 (CN)
(72) Inventor: MA, Zhenhao, Qingdao, Shandong 266101 (CN); JING, Tao, Qingdao, Shandong 266101 (CN); CAI, Zeyao, Qingdao, Shandong 266101 (CN); LI, Jianke, Qingdao, Shandong 266101 (CN); YUAN, Shanshan, Qingdao, Shandong 266101 (CN)
(74) Representative: Ziebig Hengelhaupt Intellectual Property Attorneys Patentanwaltsanwaltskanzlei PartGmbB
(86) International application number: PCT/CN2020/089223
(87) International publication number: WO 2020/224647

(56) References cited:
- WO-A1-2018/219082
- CN-A- 101 893 285
- CN-A- 104 132 412
- CN-A- 104 154 591
- CN-A- 104 764 157
- CN-A- 106 196 492
- CN-A- 106 288 151
- CN-A- 107 178 874
- CN-A- 107 490 062
- CN-A- 107 606 743
- CN-A- 110 160 217
- JP-A- 2006 021 145

## Description

### FIELD OF THE INVENTION

The present invention relates to the technical field of air conditioners, and particularly relates to a method for controlling start of a purification function of an air conditioner.

### BACKGROUND OF THE INVENTION

With the development of social economy and the improvement of people's living standards, people's requirements for the living and working environments are getting higher and higher. For example, a purification module may be arranged in an air conditioner to purify the air. However, the air purification function needs to be turned on manually. Although people are paying more and more attention to air quality, when the work is stressful, people often ignore the air purification, resulting in waste of the air purification function of the air conditioner.

CN 107178 874 A discloses a control method for an air purifier as well as the air purifier. The air purifier is preset with a plurality of operation modes, each operation mode corresponds to a group of control parameters, and the value of at least one control parameter between any two operation modes is different. The control method comprises the following steps of: 500, starting up for operation; S10, controlling the air purifier to operate under the first mode once, and alternatively operating two operation modes different from the first mode, wherein purifying capacity under the first mode is between purifying capacity under two operation modes which alternately operate. According to the control method for the air purifier disclosed, the air purifier is used for reducing concentration of indoor particulate matters to a proper range at an initial operation stage, and then alternatively operates among different operation modes, so that the air purifier is prevented from operating for a long time under high load to protect core parts and save energy resources; and meanwhile, concentration of the indoor particulate matters also can be kept at relatively low level.

### BRIEF DESCRIPTION OF THE INVENTION

In view of the above problem, the present invention provides a method for controlling start of a purification function of an air conditioner to overcome the above problem or at least partially solve the above problem.

Specifically, the present invention provides a method for controlling start of a purification function of an air conditioner, including:
step A: turning on the air conditioner, and recording a turn-on time of the air conditioner to acquire a first time;
step B: calculating a time interval between the first time and the time when the air conditioner completes the purification function last time, and determining whether the time interval is greater than or equal to a first preset duration, if so, performing step E, otherwise, performing step C;
step C: determining whether the time interval is greater than an air purification cycle, and determining whether a time difference between the time interval and the air purification cycle is greater than a preset warning difference; when the time interval is greater than the air purification cycle and the time difference between the time interval and the air purification cycle is greater than the preset warning difference, performing step D; when the time interval is greater than the air purification cycle and the time difference between the time interval and the air purification cycle is less than or equal to the preset warning difference, sending first reminding information, and performing step H;
step D: sending second reminding information, and performing step E;
step E: determining whether the air conditioner is in a default purification mode, if so, performing step F, otherwise, performing step G;
step F: enabling an air purification module of the air conditioner to work, and when the air purification module completes the purification function, recording the time when the purification function is completed, and updating the air purification cycle;
step G: enabling the air conditioner to operate according to a received air conditioner operating mode; and determining whether the received air conditioner operating mode is a purification mode, and if so, performing the step F; and
step H: determining whether the selection of an air conditioner operating mode is received, if so, performing the step G, otherwise, enabling the air conditioner to operate according to a default mode or a memory mode of the air conditioner.

Optionally, when the time interval is less than the air purification cycle, the step H is performed.

Optionally, the step A further includes: after the air conditioner is turned on, recording the current time every second preset duration, and taking the current time as a new first time.

Optionally, the step E further includes starting the air purification module without performing the air purification.

Optionally, when the second reminding information is sent, a countdown of a third preset duration is sent, and if the selection of the air conditioner operating mode is not received before the end of the countdown, it is determined that the air conditioner is in the default purification mode.

Optionally, the step F further includes: collecting air information to update the air purification cycle according to the air information.

Optionally, when the air conditioner is turned on for the first time, the time when the air conditioner completes the purification function last time is determined as a production date of the air conditioner, and the air purification cycle is determined as a fourth preset duration.

Optionally, the first preset duration is 20 days to 70 days;
the preset warning difference is 3 days to 7 days; and
the fourth preset duration is 12 days to 18 days.

The present invention provides a method for controlling start of a purification function of an air conditioner. Aiming at the problem that the purification function of an air conditioner needs to be turned on manually, which causes people to ignore the purification function of the air conditioner, the control method of the present invention can automatically remind a user to perform air purification when the air conditioner does not operate the purification function for a long time, can automatically operate the purification function when the air conditioner does not operate the purification function for an overlong time, and can also remind the user that the air purification is performed, so as to improve the exerting efficiency of the purification function of the air conditioner, and improve the air quality for air conditioner users.

Moreover, the air purification cycle is a variable value which will be updated after each purification to make the purification control method of the air conditioner more "regionalized" or "domesticated", which is reflected in environmental difference. Furthermore, the user selection is the first. The forced purification of the air conditioner cannot be superior to the user selection. The air conditioner can remind, warn and automatically turn on the purification function. When reminding, user operation is prior to the purification. When warning and turning on automatically, it needs to be defaulted by the user. For example, with a 10-second countdown, if the user makes no operation before the end of the countdown, it is indicated that the automatic selection of the air conditioner is defaulted.

The above and other objectives, advantages, and characteristics of the present invention will be better understood by those skilled in the art according to the following detailed description of specific embodiments of the present invention in conjunction with the accompanying drawings.

### BRIEF DESCRIPTION OF THE DRAWINGS

In the following part, some specific embodiments of the present invention will be described in detail in an exemplary rather than limited manner with reference to the accompanying drawings. The same reference numerals in the accompanying drawings indicate the same or similar components or parts. Those skilled in the art should understand that these accompanying drawings are not necessarily drawn to scale. In the drawings:

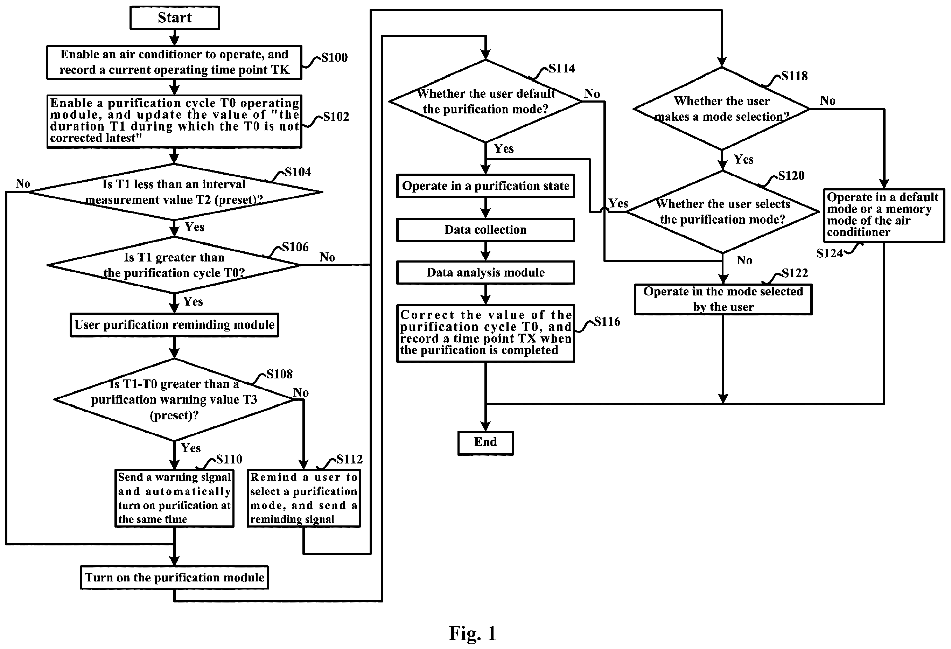

Figure 1 is a schematic flow chart of a method for controlling start of a purification function of an air conditioner according to an embodiment of the present invention.

### DETAILED DESCRIPTION

The present embodiment provides a method for controlling start of a purification function of an air conditioner. Figure 1 is a schematic flow chart of a method for controlling start of a purification function of an air conditioner according to an embodiment of the present invention. As shown in Figure 1, the method for controlling start of a purification function of an air conditioner may include the following steps:
step A (S100): the air conditioner is turned on, and a turn-on time of the air conditioner is recorded to acquire a first time TK. TK is a time point.
step B: a time interval T1 between the first time TK and the time TX (TX is also a time point) when the air conditioner completes the purification function last time is calculated, that is, T1=TK-TX (S102); and whether the time interval T1 is greater than or equal to a first preset duration T2 is determined (S104), if so, step E is performed, otherwise, step C is performed.
step C: whether the time interval T1 is greater than an air purification cycle T0 is determined (S106), and whether a time difference between the time interval T1 and the air purification cycle T0 is greater than a preset warning difference T3 is determined (S108); when the time interval T1 is greater than the air purification cycle T0 and the time difference between the time interval T1 and the air purification cycle T0 is greater than the preset warning difference T3, step D is performed; and when the time interval T1 is greater than the air purification cycle T0 and the time difference between the time interval T1 and the air purification cycle T0 is less than or equal to the preset warning difference T3, first reminding information is sent (S112), and step H is performed.
step D: second reminding information is sent (S110), and step E is performed.
step E: whether the air conditioner is in a default purification mode is determined (S114), if so, step F is performed, otherwise, step G is performed.
step F: an air purification module of the air conditioner works, and when the air purification module completes the purification function, the time TX when the purification function is completed is recorded, and the air purification cycle T0 is updated (S116).
step G: the air conditioner operates according to a received air conditioner operating mode (S122).
step H: whether the selection of an air conditioner operating mode is received is determined (S118 and S120), if so, step G is performed, otherwise, the air conditioner operates according to a default mode or a memory mode of the air conditioner (S124).

In the embodiments of the present invention, the control method can automatically remind a user to perform air purification when the air conditioner does not turn on or operate the purification function for a long time, can automatically operate the purification function when the air conditioner does not turn on or operate the purification function for an overlong time, and can also remind the user that the air purification is performed, so as to improve the exerting efficiency of the purification function of the air conditioner, and improve the air quality for air conditioner users.

In some embodiments of the present invention, the step G includes: whether the received air conditioner operating mode is the purification mode is determined, if so, the step F is performed, otherwise, the air conditioner operates according to a refrigerating mode or an air supply mode selected by a user. When the time interval T1 is less than the air purification cycle T0, the step H may be performed. The step E further includes: the air purification module is started without performing the air purification. When the second reminding information is sent, a countdown of a third preset duration is sent, and if the selection of the air conditioner operating mode is not received before the end of the countdown, it is determined that the air conditioner is in the default purification mode. The step F further includes: air information is collected to update the air purification cycle T0 according to the air information. In order to prevent the air conditioner from being turned on for a long term and causing a relatively long time between two times of turning on, the step A further includes: after the air conditioner is turned on, recording the current time every second preset duration, and taking the current time as a new first time TK. When the air conditioner is turned on for the first time, the time TX when the air conditioner completes the purification function last time is determined as a production date of the air conditioner, and the air purification cycle T0 is determined as a fourth preset duration.

In some embodiments of the present invention, TK is a time point of turning on this time, and TK is a variable value which is updated each turning on. TX is a time point of "completing" the purification operation last time, and an initial value of TX is the production date of the air conditioner. T0 is a purification cycle of the air conditioner, the time interval between two adjacent times of "needing" to perform purification controlled by an air conditioner control system. T0 is a variable value, and an initial value thereof is preset according to the environment air condition of an air conditioner sales area (if the environment is poor, T0 is small, and if the environment is good, T0 is large; for example, if the PM2.5 content in the air conditioner sales area is higher than a preset value, T0 is a smaller value, and if the PM2.5 content in the air conditioner sales area is lower than a preset value, T0 is a larger value). T0 is corrected after each purification is completed, and mainly may be corrected by collection and analysis of data (such as air quality, updating time, updating power, filter element use condition, and the like) of the air conditioner during purification. The initial value of T0 is the fourth preset duration, and specifically may be 12 days to 18 days, such as 15 days. T1 is "the time interval during which the T0 is not corrected latest", which is equivalent to the time interval during which the air conditioner does not operate purification recently, that is, the time point TK of turning on this time subtracts the time point TX when the purification is completed last time (namely the time point of correcting T0 last time) T1=TK-TX.

T2 may be a fixed value and may also be referred to as a T0 correction interval T1 measurement value. The first preset duration T2 is 20 days to 70 days, such as 40 days or 60 days. T2 is preset by the air conditioner control system to measure the size of T1. If a value exceeds this parameter, it means that the air conditioner is not purified for an overlong time. For example, after the air conditioner is used in winter and then used again in summer, since the air conditioner is not turned on for an overlong time, the user can be directly reminded to perform air purification and update the air purification cycle T0 after the air conditioner is turned on in summer according to T2>T1. In the case that the user does not force to use other operating modes, the air conditioner can first perform air purification and update the air purification cycle. Optionally, if the air purification cycle T0 determined by the last air purification is greater than T2, according to the time interval T1 greater than the air purification cycle T0, it is determined that the next air purification will cause the delayed air purification. Therefore, setting the first preset duration is necessary, needful and significant.

T3 may also be referred to as a purification warning value or a constant value, which is used to measure how long the duration without purification exceeds the cycle T0. The preset warning difference T3 may be 3 days to 7 days, preferably 5 days.

In some specific embodiments of the present invention, after the air conditioner is turned on, the time point TK (such as 2019.04.20) of turning on this time is recorded. After the air conditioner is turned on, the module of the purification cycle T0 may be operated to update the "duration T1 during which T0 is not corrected", T1=TK-TX. Whether T1 is less than T2 is determined.

If T1 is not less than T2, it means that T0 of the air conditioner is not corrected for an overlong time, that is, the air purification is not performed for a long time. At this time, the air conditioner automatically enters "air purification module on", and then, whether the user defaults the automatic selection of the system is determined. If the user defaults the automatic selection of the system, "purification operation, data collection and data analysis" are performed. After the purification is completed, T0 is corrected, and TK is recorded (for next on operation and acquisition of T1). If the user does not default the selection, but selects other operating modes (such as refrigeration and air supply), the air conditioner operates according to the selection of the user.

If T1 is less than T2, it means that T0 is updated in time, and then, whether the interval T1 between the time point TK of turning on this time and the time point when the purification is completed last time exceeds the purification cycle T0 is determined. If T1 is greater than T0, it means that the purification cycle is exceeded, the user should control the air conditioner for purification, then the air conditioner enters a "user purification reminding module", and then the overdue degree and the value of T1-T0 are determined and measured by T3. If T1=35 days and T0=15 days less than T2 (60 days) and T1-T0=20 days much greater than T3 (5 days), it means that the air conditioner is not purified for a relatively long time, which will seriously affect the health of the user, the air conditioner warns the user and automatically turns on the purification (not operating) to enter "purification module on", and then, whether the user defaults the automatic selection of the system is determined.

If T 1 = 18 days, T1>T0, but T1-T0=3 days less than the warning value T3 (5 days), it means that the air conditioner should be purified, but the time cycle exceeded is not long, and then, the air conditioner only reminds the user to select the purification mode and determines whether the user selects the purification mode (for example, the air conditioner waits for an instruction input or preset by the user through terminals such as a remote controller). If the user makes a selection, whether the user selects the purification mode is determined. If the user selects the purification mode, the steps of "purification operation, data collection and data analysis" are performed, and after the air conditioner completes the purification, T0 is corrected and TK is recorded. If the user does not make a selection, the air conditioner enters "a default mode or a memory mode of the air conditioner" to operate. If T1 is not greater than T0, for example, T1=10 days, it means that the air conditioner has been purified ten days ago, the purification cycle T0 (such as 15 days) is not yet reached, and then, whether the user selects the operating mode is determined. If the user does not make a selection, the air conditioner enters "a default mode or a memory mode of the air conditioner" to operate. Finally, the air conditioner is turned off.

Hereto, those skilled in the art should realize that although multiple exemplary embodiments of the present invention have been shown and described in detail herein, without departing from the scope of the present invention, many other variations or modifications that conform to the present invention can still be directly determined or deduced from contents disclosed in the present invention. Therefore, the scope of the present invention, which is solely defined by the appended claims, should be understood and recognized as covering all these other variations or modifications as long as they fall within the scope of the protection of said appended claims.

## Claims

1. A method for controlling an air conditioner with an air purification module, in particular the start of said air purification module, comprising:
step A: turning on the air conditioner, and recording a turn-on time of the air conditioner to acquire a first time (TK);
step B: calculating a time interval (T1) between the first time (TK) and a time (TX) when the air conditioner completed the purification function last time, and determining whether the time interval (T1) is greater than or equal to a first preset duration (T2), if so, performing step E, otherwise, performing step C;
step C: determining whether the time interval (T1) is greater than an air purification cycle (T0), and determining whether a time difference between the time interval (T1) and the air purification cycle (T0) is greater than a preset warning difference; when the time interval (T1) is greater than the air purification cycle (T0) and the time difference between the time interval (T1) and the air purification cycle (T0) is greater than the preset warning difference, performing step D; when the time interval (T1) is greater than the air purification cycle (T0) and the time difference between the time interval (T1) and the air purification cycle (T0) is less than or equal to the preset warning difference, sending first reminding information to a user, and performing step H;
step D: sending second reminding information to a user, and performing step E;
step E: determining whether the air conditioner is in a default purification mode, if so, performing step F, otherwise, performing step G;
step F: enabling the air purification module of the air conditioner to work, and when the air purification module completes the purification function, recording the time (TX) when the purification function is completed, and updating the air purification cycle (T0);
step G: enabling the air conditioner to operate according to a received air conditioner operating mode; and determining whether the received air conditioner operating mode is a purification mode, and if so, performing the step F, and
step H: determining whether a selection of an air conditioner operating mode is received, if so, performing the step G, otherwise, enabling the air conditioner to operate according to a default mode or a memory mode of the air conditioner.

2. The method according to claim 1, wherein
when the time interval (T1) is less than the air purification cycle (T0), performing the step H.

3. The method according to claim 1, wherein the step A further comprises:
after the air conditioner is turned on, recording the current time every second preset duration, and taking the current time as a new first time (TK).

4. The method according to claim 1, wherein
the step E further comprises starting the air purification module without performing the air purification.

5. The method according to claim 1 or 4, wherein
When the second reminding information is sent to a user, a countdown of a third preset duration is sent, and if the selection of the air conditioner operating mode is not received before the end of the countdown, it is determined that the air conditioner is in the default purification mode.

6. The method according to claim 1, wherein
the step F further comprises: collecting air information to update the air purification cycle (T0) according to the air information.

7. The method according to claim 1, wherein
when the air conditioner is turned on for the first time (TK), the time (TX) when the air conditioner completed the purification function last time is determined as the production date of the air conditioner, and the air purification cycle (T0) is determined as a fourth preset duration.

8. The method according to claim 7, wherein
the first preset duration (T2) is 20 days to 70 days;
the preset warning difference is 3 days to 7 days; and
the fourth preset duration is 12 days to 18 days.

## Patentansprüche

1. Verfahren zum Steuern einer Klimaanlage mit einem Luftreinigungsmodul, insbesondere des Starts des Luftreinigungsmoduls, umfassend:
Schritt A: Einschalten der Klimaanlage, und Aufzeichnen einer Einschaltzeit der Klimaanlage, um einen ersten Zeitpunkt (TK) zu erfassen;
Schritt B: Berechnen eines Zeitintervalls (T1) zwischen dem ersten Zeitpunkt (TK) und einem Zeitpunkt (TX), zu dem die Klimaanlage die Reinigungsfunktion das letzte Mal abgeschlossen hat, und Bestimmen, ob das Zeitintervall (T1) größer oder gleich zu einer ersten voreingestellten Dauer (T2) ist, falls ja, Ausführen von Schritt E, andernfalls Ausführen von Schritt C;
Schritt C: Bestimmen, ob das Zeitintervall (T1) größer als ein Luftreinigungszyklus (T0) ist, und Bestimmen, ob eine Zeitdifferenz zwischen dem Zeitintervall (T1) und dem Luftreinigungszyklus (T0) größer als eine voreingestellte Warndifferenz ist; wenn das Zeitintervall (T1) größer als der Luftreinigungszyklus (T0) ist und die Zeitdifferenz zwischen dem Zeitintervall (T1) und dem Luftreinigungszyklus (T0) größer als die voreingestellte Warndifferenz ist, Ausführen von Schritt D; wenn das Zeitintervall (T1) größer als der Luftreinigungszyklus (T0) ist und die Zeitdifferenz zwischen dem Zeitintervall (T1) und dem Luftreinigungszyklus (T0) kleiner oder gleich der voreingestellten Warndifferenz ist, Senden der ersten Erinnerungsinformation an einen Benutzer, und Ausführen von Schritt H;
Schritt D: Senden einer zweiten Erinnerungsinformation an einen Benutzer, und Ausführen von Schritt E;
Schritt E: Bestimmen, ob sich die Klimaanlage in einem Standard-Reinigungsmodus befindet, wenn ja, Ausführen von Schritt F, andernfalls Ausführen von Schritt G;
Schritt F: Ermöglichen, dass das Luftreinigungsmodul der Klimaanlage arbeitet, und wenn das Luftreinigungsmodul die Reinigungsfunktion abschließt, Aufzeichnen des Zeitpunkts (TX), wenn die Reinigungsfunktion abgeschlossen ist, und Aktualisieren des Luftreinigungszyklus (T0);
Schritt G: Ermöglichen, dass die Klimaanlage gemäß einem empfangenen Klimaanlagen-Betriebsmodus arbeitet; und Bestimmen, ob der empfangene Klimaanlagen-Betriebsmodus ein Reinigungsmodus ist, und wenn ja, Ausführen des Schritts F, und
Schritt H: Bestimmen, ob eine Auswahl eines Klimaanlagen-Betriebsmodus empfangen wird, falls ja, Ausführen des Schritts G, andernfalls Ermöglichen, dass die Klimaanlage gemäß einem Standardmodus oder einem Speichermodus der Klimaanlage arbeitet.

2. Verfahren nach Anspruch 1, wobei
wenn das Zeitintervall (T1) kleiner als der Luftreinigungszyklus (T0) ist, Ausführen des Schritts H.

3. Verfahren nach Anspruch 1, wobei der Schritt A des Weiteren umfasst:
nachdem die Klimaanlage eingeschaltet wird, Aufzeichnen des aktuellen Zeitpunkts jeder zweiten voreingestellten Dauer, und Aufnehmen des aktuellen Zeitpunkts als einen neuen ersten Zeitpunkt (TK).

4. Verfahren nach Anspruch 1, wobei
der Schritt E des Weiteren das Starten des Luftreinigungsmoduls ohne Durchführen der Luftreinigung umfasst.

5. Verfahren nach Anspruch 1 oder 4, wobei
Wenn die zweite Erinnerungsinformation an einen Benutzer gesendet wird, ein Countdown einer dritten voreingestellten Dauer gesendet wird, und wenn die Auswahl des Klimaanlagen-Betriebsmodus nicht vor dem Ende des Countdowns empfangen wird, bestimmt wird, dass sich die Klimaanlage in dem Standard-Reinigungsmodus befindet.

6. Verfahren nach Anspruch 1, wobei
der Schritt F des Weiteren umfasst: Sammeln von Luftinformationen, um den Luftreinigungszyklus (T0) gemäß den Luftinformationen zu aktualisieren.

7. Verfahren nach Anspruch 1, wobei
wenn die Klimaanlage zum ersten Zeitpunkt (TK) eingeschaltet wird, der Zeitpunkt (TX), als die Klimaanlage die Reinigungsfunktion das letzte Mal abgeschlossen hat, als Produktionsdatum der Klimaanlage bestimmt wird, und der Luftreinigungszyklus (T0) als vierte voreingestellte Dauer bestimmt wird.

8. Verfahren nach Anspruch 7, wobei
die erste voreingestellte Dauer (T2) 20 Tage bis 70 Tage beträgt;
die voreingestellte Warndifferenz 3 Tage bis 7 Tage beträgt; und
die vierte voreingestellte Dauer 12 Tage bis 18 Tage beträgt.

## Revendications

1. Procédé de commande d'un climatiseur avec un module de purification d'air, en particulier le démarrage dudit module de purification d'air, comprenant:
étape A : la mise en marche du climatiseur et l'enregistrement d'un temps d'allumage du climatiseur pour acquérir une première fois (TK) ;
étape B : calculer un intervalle de temps (T1) entre la première fois (TK) et un temps (TX) où le climatiseur a terminé la fonction de purification la dernière fois, et déterminer si l'intervalle de temps (T1) est supérieur ou égal à une première durée prédéfinie (T2), si tel est le cas, exécuter l'étape E, sinon, exécuter l'étape C;
étape C: déterminer si l'intervalle de temps (T1) est supérieur à un cycle de purification d'air (TO) et déterminer si une différence de temps entre l'intervalle de temps (T1) et le cycle de purification d'air (TO) est supérieure à une différence d'avertissement prédéfinie; lorsque l'intervalle de temps (T1) est supérieur au cycle de purification d'air (TO) et que la différence de temps entre l'intervalle de temps (T1) et le cycle de purification d'air (TO) est supérieure à la différence d'avertissement prédéfinie, effectuer l'étape D; lorsque l'intervalle de temps (T1) est supérieur au cycle de purification d'air (TO) et que la différence de temps entre l'intervalle de temps (T1) et le cycle de purification d'air (TO) est inférieure ou égale à la différence d'avertissement prédéfinie, envoyer d'abord une informations de rappel à un utilisateur et exécuter l'étape H;
étape D : envoyer une deuxième information de rappel à un utilisateur, et exécuter l'étape E ;
étape E: déterminer si le climatiseur est en mode de purification par défaut, si tel est le cas, exécuter l'étape F, sinon, exécuter l'étape G;
étape F: permettre au module de purification d'air du climatiseur de fonctionner, et lorsque le module de purification d'air termine la fonction de purification, enregistrer le temps (TX) lorsque la fonction de purification est terminée, et mettre à jour le cycle de purification d'air (TO);
étape G: permettre au climatiseur de fonctionner selon un mode de fonctionnement du climatiseur reçu; et déterminer si le mode de fonctionnement du climatiseur reçu est un mode de purification et, si tel est le cas, exécuter l'étape F;
étape H : déterminer si une sélection d'un mode de fonctionnement du climatiseur est reçue, si tel est le cas, exécuter l'étape G, sinon, permettre au climatiseur de fonctionner selon un mode par défaut ou en mode mémoire du climatiseur.

2. Le procédé selon la revendication 1, dans lequel
lorsque l'intervalle de temps (TI) est inférieur au cycle de purification d'air (TO), exécuter l'étape H.

3. Le procédé selon la revendication 1, dans lequel l'étape A comprend en outre :
après la mise en marche du climatiseur, l'enregistrement du temps actuel chaque seconde de durée prédéfinie et accepter le temps actuel comme une nouvelle première fois (TK).

4. Le procédé selon la revendication 1, dans lequel
l'étape E consiste en outre à démarrer le module de purification d'air sans effectuer la purification d'air.

5. Le procédé selon la revendication 1 ou 4, dans lequel
lorsque la deuxième information de rappel est envoyée à un utilisateur, un compte à rebours d'une troisième durée prédéfinie est envoyé, et si la sélection du mode de fonctionnement du climatiseur n'est pas reçue avant la fin du compte à rebours, il est déterminé que le climatiseur est en mode de purification par défaut.

6. Le procédé selon la revendication 1, dans lequel
l'étape F comprend en outre : la collecte des données sur l'air pour la mise à jour du cycle de purification d'air (TO) en fonction des données sur l'air.

7. Le procédé selon la revendication 1, dans lequel
lorsque le climatiseur est allumé pour la première fois (TK), le moment (TX) où le climatiseur a terminé la fonction de purification la dernière fois est déterminé comme la date de production du climatiseur, et le cycle de purification d'air (TO) est déterminé comme une quatrième durée prédéfinie.

8. Le procédé selon la revendication 7, dans lequel
la première durée prédéfinie (T2) est de 20 jours à 70 jours;
la différence d'avertissement prédéfinie est de 3 jours à 7 jours; et
la quatrième durée prédéfinie est de 12 jours à 18 jours.
